# FASCICULE DE BREVET EUROPEEN

(11) **EP 2 106 284 B1**
(45) Date de publication et mention de la délivrance du brevet: **08.06.2016**
(21) Numéro de dépôt: 07870372.5
(22) Date de dépôt: 30.11.2007
(51) Int. Cl.: B01D 53/047, C01B 3/56

(54) **PROCEDE DE PURIFICATION PAR ADSORPTION D'HYDROGENE AVEC COGENERATION D'UN FLUX DE CO2 EN PRESSION**
WASSERSTOFFADSORPTIONSREINIGUNGSVERFAHREN MIT GLEICHZEITIGER ERZEUGUNG EINES UNTER DRUCK STEHENDEN CO2-STROMS
HYDROGEN ADSORPTION PURIFICATION METHOD WITH CO-GENERATION OF A PRESSURISED CO2FLOW

(30) Priorité: 22.12.2006 FR 0611406
(43) Date de publication de la demande: 07.10.2009
(73) Titulaire: IFP Énergies nouvelles, 92852 Rueil-Malmaison Cedex (FR)
(72) Inventeur: PIRNGRUBER, Gerhard, F-69390 Charly (FR); JOLIMAITRE, Elsa, F-69001 Lyon (FR); WOLFF, Luc, F-69970 Chaponnay (FR); LEINEKUGEL LE COQ, Damien, F-69007 LYON (FR)
(86) Numéro de dépôt international: PCT/FR2007/001978
(87) Numéro de publication internationale: WO 2008/081102

(56) Documents cités:
- EP-A- 1 018 485
- EP-A- 1 120 149
- GB-A- 1 241 065
- US-B1- 6 179 900
- BOURRELLY S. ET AL.: "DIFFERENT ADSORPTION BEHAVIORS OF METHANE AND CARBON DIOXIDE IN THE ISOTYPIC NANOPOROUS METAL TEREPHTHALATES MIL-53 AND MIL-47" J. AM. CHEM. SOC., vol. 127, 2005, pages 13519-13521, XP002432929
- HIMENO S ET AL: "HIGH-PRESSURE ADSORPTION EQUILIBRIA OF METHANE AND CARBON DIOXIDE ON SEVERAL ACTIVATED CARBONS" JOURNAL OF CHEMICAL AND ENGINEERING DATA, AMERICAN CHEMICAL SOCIETY, US, vol. 50, no. 2, 2005, pages 369-376, XP009083546 ISSN: 0021-9568
- KNOWLES ET AL: "Aminopropyl-functionalized mesoporous silicas as CO2 adsorbents" FUEL PROCESSING TECHNOLOGY, vol. 86, no. 14-15, 1 octobre 2005 (2005-10-01), pages 1435-1448, XP005000676 ISSN: 0378-3820

## Description

### DOMAINE TECHNIQUE DE L'INVENTION

La présente invention concerne un procédé de purification par adsorption de l'hydrogène issu du gaz de synthèse avec cogénération d'un flux d'impuretés et particulièrement de CO₂ à une pression supérieure à 0,4 MPa.

### ÉTAT DE L'ART ANTERIEUR

La production d'hydrogène est une préoccupation importante dans les secteurs de l'énergie, du raffinage et de l'industrie pétrochimique. L'hydrogène peut être utilisé par exemple comme carburant pour les piles à combustible et pour la production d'énergie par combustion dans des turbines de gaz. L'hydrogène est aussi utilisé comme réactif dans de nombreux procédés de raffinage et de pétrochimie, ainsi que pour la production de l'ammoniaque.

L'hydrogène est très majoritairement produit à partir de charges hydrocarbonées d'origines diverses (gaz naturel, coupes pétrolières, biomasse, etc.). Les principaux procédés de production d'hydrogène à partir de ces charges sont le vaporéformage, la gazéification, l'oxydation partielle et le reformage autothermique. Tous ces procédés permettent de produire du gaz de synthèse, qui contient majoritairement de l'hydrogène, du monoxyde de carbone (CO) et du dioxyde de carbone (CO₂), mais également du méthane (CH₄) et des hydrocarbures plus lourds et, si l'air est utilisé dans le procédé de transformation, de l'azote et de l'argon ou tout autre molécule initialement présente dans l'air. L'hydrogène doit donc être purifié avant son utilisation finale.

Plusieurs techniques pour purifier l'hydrogène sont connues de l'art antérieur : la séparation par absorption par un solvant chimique (par exemple de la famille des amines) ou physique, la séparation par adsorption modulée en pression (en anglais « Pressure Swing Adsorption » ou (PSA)), ou la séparation membranaire.

Les procédés d'absorption utilisant les amines ne permettent pas d'éliminer l'ensemble des impuretés, et notamment les molécules telles que l'azote, l'argon, le monoxyde de carbone et le méthane.

Les performances des procédés de purification d'hydrogène par membranes dépendent fortement du matériau membranaire utilisé. Seuls les métaux (alliages de palladium par exemple) et les oxydes mixtes permettent d'obtenir des teneurs en CO dans l'hydrogène final comparables à celles de l'hydrogène produit par PSA. Or, ces membranes sont très onéreuses et ne peuvent fonctionner qu'à des températures très élevées (supérieures à 350°C), ce qui augmente notablement le coût total de production de l'hydrogène.

Pour produire un hydrogène de haute pureté, le PSA est donc la méthode la plus adaptée.

Le principe du PSA est bien connu de l'homme de l'art. Le gaz à purifier traverse à la pression haute du cycle, encore appelée « pression d'adsorption » des couches de matériaux adsorbants qui retiennent préférentiellement la ou les impuretés. Ces composés sont ensuite extraits de ces mêmes adsorbants en baissant la pression jusqu'à une pression dite « de désorption ». Le principe même du PSA est d'enchaîner cycliquement ces phases d'adsorption à haute pression et de désorption à basse pression.

Le flux d'hydrogène purifié est donc produit à haute pression, alors que le flux résiduel riche en impuretés est produit à basse pression.

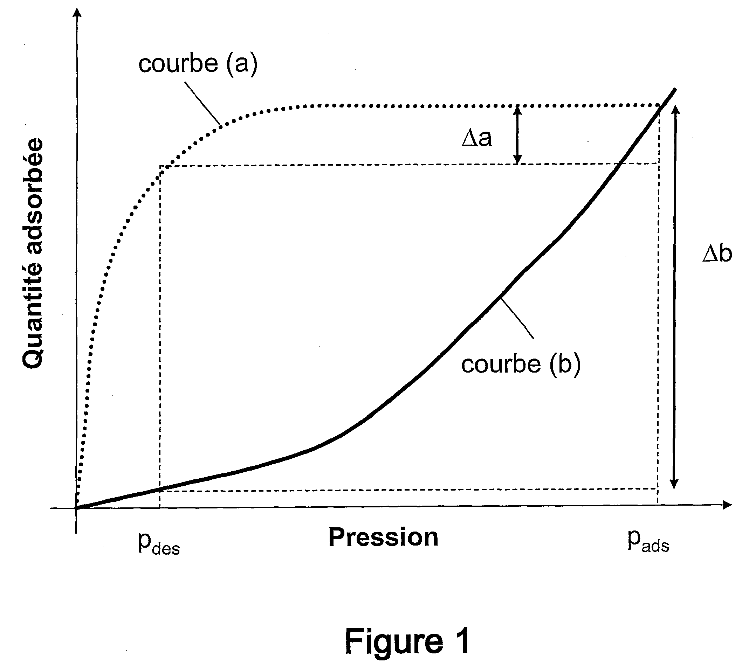

Les performances d'un PSA sont évaluées par la détermination de la valeur de la capacité dynamique d'un adsorbant. La capacité dynamique d'un adsorbant est définie comme étant la différence de la quantité adsorbée dans les conditions de l'étape d'adsorption et la quantité restant adsorbée après désorption. La capacité dynamique est une fonction des isothermes d'adsorption des différents constituants de la charge. En négligeant les effets cinétiques, la capacité dynamique d'un constituant donné peut être estimée par le calcul de l'écart entre la quantité adsorbée à la pression d'adsorption P_{ads} et la quantité adsorbée à la pression de la désorption P_{des} pour ce constituant (Figure 1). Les performances d'un PSA sont caractérisées principalement par la pureté de l'hydrogène produit, le rendement en hydrogène (c'est-à-dire la quantité d'hydrogène produite rapportée à la quantité d'hydrogène contenue dans la charge) et la productivité (la quantité d'hydrogène produite rapportée à la masse d'adsorbant contenue dans le procédé et au temps). Ces trois caractéristiques de performances sont liées. Pour une capacité dynamique donnée, on ne peut augmenter une de ces performances qu'au détriment d'une ou des deux autres. Par exemple, si on obtient une certaine pureté pour une productivité donnée, on a une pureté plus faible pour une productivité plus importante. En revanche, une augmentation de la capacité dynamique peut permettre d'augmenter une de ces performances en maintenant les autres constantes. On peut obtenir une certaine pureté pour un débit de charge donné, ou une pureté plus faible pour un débit de charge plus important.

Un PSA classique pour la purification de l'hydrogène contient plusieurs couches d'adsorbant. En règle générale, on utilise tout d'abord une couche de charbon actif pour adsorber le CO₂ et ensuite une couche de zéolithe 5A ou NaX pour adsorber le CH₄, le CO et les autres impuretés éventuellement présentes dans la charge. Lorsque de l'eau est présente dans la charge, le PSA peut également contenir une couche préliminaire de gel de silice.

Ces adsorbants ont de bonnes capacités d'adsorption à haute pression pour les différentes impuretés contenues dans la charge. En revanche, leur régénération (désorption des impuretés) nécessite de descendre à des pressions proches de la pression atmosphérique. On peut voir sur la courbe (a) représentée à la Figure 1 que la capacité dynamique des adsorbants classiques chute très fortement lorsque la pression de désorption est trop élevée. En conséquence, le flux riche en CO₂ issu de la purification de l'hydrogène par PSA classique est toujours produit à basse pression.

La production d'un flux résiduel des impuretés à haute pression pourrait avoir des applications pour la production d'énergie (par exemple par combustion), dans l'industrie chimique (synthèse de méthanol et diméthyléther, solvant supercritique, etc.), dans le domaine du forage (enhanced oil recovery), ou encore pour le stockage du CO₂ (après compression et/ou liquéfaction), etc.

Plusieurs solutions permettant de produire le flux d'impuretés à une pression plus élevée ont été proposées dans l'art antérieur.

La demande de brevet WO 2006/112724 décrit un procédé de production d'hydrogène pour des turbines à gaz, à partir du vaporéformage du méthane. Le mélange sortant du réacteur de gaz à l'eau est séparé par PSA pour produire un flux riche en hydrogène, contentant 10-20 % d'impuretés (CO, CH₄ et CO₂) et un flux résiduel, contenant majoritairement du CO₂ ainsi que du CO, H₂O, H₂ et CH₄. Le procédé décrit propose de récupérer ce flux résiduel à une pression élevée et non pas à la pression atmosphérique, pour diminuer le coût de sa recompression. Mais aucune solution technique n'est proposée pour produire le CO₂ à haute pression en maintenant de bonnes performances pour la purification de l'hydrogène.

La demande de brevet WO 2006/097703 décrit un procédé de production d'hydrogène soit pour la production d'énergie par combustion soit comme carburant de haute pureté, avec récupération du CO₂ coproduit. Un PSA est proposé comme mode de séparation préféré, parce qu'il permet d'atteindre des puretés d'hydrogène très élevées. Le gaz résiduel sortant du PSA, riche en CO₂, est récupéré par condensation. Pour diminuer le coût de la recompression du CO₂, le procédé décrit propose de maintenir une haute pression du gaz résiduel à la sortie du PSA. Cette augmentation de la pression de désorption entraîne une perte de la capacité dynamique et diminue le rendement en hydrogène. Il est donc nécessaire de faire un compromis entre le taux de récupération de l'hydrogène et la pression du gaz résiduel.
- La demande de brevet WO 00/18680 décrit un procédé de production d'hydrogène pour des turbines à gaz, combiné avec la séparation et la séquestration du CO₂ co-produit. Les pressions opératoires du réacteur de vaporéformage et du réacteur de gaz à l'eau sont très élevées. L'unité de séparation H₂/impuretés est donc également opérée à une pression très élevée. Le mode de séparation préféré est l'absorption de CO₂ par une solution d'amines. La solution d'amines est régénérée à une pression comprise entre 0,5 et 0,8 MPa. La mise en oeuvre proposée ne permet pas de produire un flux d'hydrogène de haute pureté puisque la solution d'amines n'absorbe pas le monoxyde de carbone ni le méthane. Le schéma est donc uniquement adapté à l'utilisation de l'hydrogène pour les turbines de gaz.
- La demande de brevet WO 2003/070357 décrit un procédé PSA de séparation d'un mélange gazeux contenant de l'hydrogène et des impuretés de type hydrocarbures permettant de produire un flux d'hydrogène à haute pureté et un flux résiduel riche en hydrocarbures. Pour valoriser le flux résiduel, il est intéressant de l'obtenir à une pression élevée, supérieure à 0,4 MPa. L'adsorbant utilisé est une combinaison d'un charbon actif et un gel de silice, ce qui permet de désorber les hydrocarbures à des pressions élevées mais avec une perte très sensible du rendement en hydrogène. Le charbon actif et le gel de silice sont des adsorbants bien connus de l'homme de l'art mais ne possèdent pas une capacité dynamique satisfaisante pour le CO₂, lorsque la désorption est effectuée à des pressions élevées.
- Le document EP 1 120 149 décrit un procédé pour la purification d'un flux gazeux contenant plusieurs impuretés gazeuses, ce flux gazeux étant de l'air de l'azote ou de l'hydrogène du gaz naturel ou un gaz de combustion ou de fermentation. Ce procédé utilise une adsorption sur des solides adsorbants carbonés poreux avec des conditions sur la densité, l'aire massique et la taille de pores.
- L'analyse de l'état de l'art antérieur montre que l'intérêt de co-produire un flux de CO₂ à haute pression pendant la purification de l'hydrogène a été identifié. Or, les solutions proposées ne permettent pas de co-produire le CO₂ en pression sans faire de compromis concernant le rendement en hydrogène et/ou sa pureté. Elles sont basées sur des changements des conditions opératoires de procédés existants, qui s'accompagnent d'une baisse de pureté ou de rendement en hydrogène.

### RÉSUMÉ DE L'INVENTION

La présente invention porte sur un procédé de production d'hydrogène d'une pureté supérieure à 99% volumique et de cogénération d'un flux d'impuretés contenant essentiellement du CO₂ à une pression supérieure à 0,4 MPa selon la revendication 1.

Par majoritairement, on entend une teneur en hydrogène d'au moins 50% molaire, et préférentiellement d'au moins 70% molaire, les teneurs maximales des principales impuretés étant de 50% molaire pour le dioxyde de carbone, 20% molaire pour le monoxyde de carbone et 10% molaire pour le méthane. Pour les charges préférées, les impuretés sont principalement constituées par du dioxyde de carbone.

L'objet de l'invention est donc un procédé de purification par adsorption de l'hydrogène employant une étape de désorption à pression plus faible que la pression de la charge, tel qu'un procédé PSA par exemple, permettant de produire le flux de désorption et notamment de récupérer le dioxyde de carbone en pression et de l'hydrogène à haute pureté et avec un rendement élevé.

Ces performances sont obtenues en associant les étapes successives du procédé selon l'invention à l'utilisation d'une nouvelle famille d'adsorbant, dont la capacité dynamique à une pression de désorption élevée est supérieure à celle des adsorbants classiques.

### DESCRIPTION DES FIGURES

La Figure 1 représente la variation de quantité adsorbée en fonction de la pression pour deux types d'adsorbant : adsorbant classique courbe a) et adsorbant selon l'invention courbe b).
La Figure 2 représente un schéma de procédé correspondant au mode de réalisation du procédé selon l'invention en lit mobile simulé (LMS) à trois zones, présentant au moins un soutirage d'extrait.
La Figure 3 représente un schéma de procédé correspondant au mode de réalisation du procédé selon l'invention en lit mobile simulé (LMS) à deux zones, présentant au moins un soutirage d'extrait.

### DESCRIPTION DÉTAILLÉE DE L'INVENTION

La présente invention porte sur un procédé de production d'hydrogène à très haute pureté à partir d'une charge contenant majoritairement ledit hydrogène et une mineure partie d'impuretés principalement constituées de dioxyde de carbone, monoxyde de carbone, méthane et hydrocarbures plus lourds, selon la revendication 1.

Le procédé de séparation par adsorption selon l'invention fait également intervenir l'utilisation de familles d'adsorbants spécifiques qui permettent de récupérer le flux d'impuretés, contenant essentiellement du CO₂, à une pression supérieure à 0,4 MPa, tout en produisant de l'hydrogène à haute pureté avec un rendement en hydrogène élevé.

Le flux d'hydrogène obtenu est d'une pureté supérieure à 99% volumique et préférentiellement supérieure à 99,9% volumique et de manière encore préférée supérieure à 99,99%.

Le rendement en hydrogène du procédé selon l'invention est supérieur à 80% et de manière préférée supérieur à 90%.

Le rendement en CO₂ du procédé selon l'invention est supérieur à 50% et de manière préférée supérieur à 70%.

Les adsorbants selon l'invention sont définis par leur capacité dynamique d'adsorption entre la pression d'adsorption P_{ads} et la pression de désorption P_{des}, P_{des} étant supérieure à 0,4 MPa.

Les adsorbants utilisés dans le procédé selon l'invention présentent une capacité dynamique de CO₂ d'au moins 2 mmole/g et préférentiellement d'au moins 4 mmole/g entre P_{ads} = 5 MPa et P_{des} = 0,4 MPa.

Dans un mode préféré du procédé selon l'invention, les adsorbants utilisés dans ledit procédé sont caractérisés par une capacité dynamique de CO₂ d'au moins 2 mmole/g et préférentiellement d'au moins 4 mmole/g entre P_{ads} = 3 MPa et P_{des} = 0,4 MPa.

Dans un mode plus préféré du procédé selon l'invention, les adsorbants utilisés dans ledit procédé sont caractérisés par une capacité dynamique de CO₂ d'au moins 2 mmole/g et préférentiellement d'au moins 4 mmole/g entre P_{ads} = 3 MPa et P_{des} = 0,5 MPa.

La capacité dynamique est comprise entre 2 et 40 mmole/g.

La pression d'adsorption P_{ads} est comprise entre 1,5 et 5 MPa, de manière préférée entre 2 et 4 MPa.

La pression de désorption P_{des} est comprise entre 0,4 et 2 MPa, de manière préférée entre 0,4 et 0,6 MPa.

Les adsorbants possédant ces propriétés possèdent des compositions chimiques et des structures poreuses très diverses. Les adsorbants décrits dans ce brevet ne sont pas limitatifs et ne sont cités qu'à titre d'exemple.

On trouve les caractéristiques recherchées préférentiellement, mais pas exclusivement avec les structures possédant une taille de pores comprise entre 5 et 50 Å, de préférence entre 7 et 25 Å. Le volume poreux de ces composés, dû à la taille des pores indiquée ci-dessus, est compris entre 0,5 et 5 ml/g, de préférence entre 0,8 et 3 ml/g. Certains adsorbants possédant les propriétés requises font partie de la famille des MOFs (Metal-Organic Frameworks). On peut citer par exemple les composés IRMOF-1, IRMOF-3, IRMOF-6, IRMOF-11, MOF-177, Cu₃(4,4',4"-s-triazine-2,4,6-triyl-tribenzoate)₂ également connu sous le nom Cu₃(tatb)₂, MIL-100, MIL-101, etc.

Les composés tels que les MOFs respirants, c'est-à-dire les structures flexibles dont les pores s'ouvrent pour obtenir des tailles supérieures à 5 Å à haute pression (à la pression d'adsorption), tel que le MIL-53, possèdent également les caractéristiques requises pour le procédé d'adsorption selon la présente invention.

Les propriétés de ces matériaux sont décrites, par exemple, dans le brevet US 6,930,193, dans l'article de Serre,C et coll., J. Am. Chem. Soc. 124 (2002) 13519 ou dans celui Ferey, G et coll., Angew. Chemie Int. Ed. 43 (2004) 6296.

Certains adsorbants de la famille des MOFs possèdent une capacité dynamique accrue en présence de certaines impuretés polaires telles que l'eau. Toutefois, si l'impureté n'est pas présente initialement dans la charge, elle peut y être ajoutée afin d'optimiser la capacité dynamique de l'adsorbant.

On trouve lesdites caractéristiques dans d'autres familles de matériaux telles que les silices mésoporeuses et les charbons actifs mésoporeux possédant une surface spécifique supérieure à 2 000 m²/g et de préférence comprise entre 2 000 et 4 000 m²/g.

De façon très générale et sans vouloir être lié par une quelconque théorie, on a constaté que la plupart des adsorbants présentant une capacité dynamique élevée et répondant aux critères de la présente invention possèdent une forme d'isotherme particulière.

Sur la Figure 1, la courbe (a) représente schématiquement l'isotherme d'un adsorbant classique de type 1. La courbe (b) représente l'isotherme d'un adsorbant ayant une forte capacité dynamique (type II). Les valeurs de la capacité dynamique sur la figure correspondent à Δa pour la courbe (a) et Δb pour la courbe (b).

La forte capacité dynamique des adsorbants selon l'invention pour le CO₂ entre la pression d'adsorption P_{ads} et la pression de régénération P_{des} supérieure à 0,4 MPa s'explique souvent par la forme de leur isotherme de CO₂. La pente de l'isotherme est faible et/ou la pente de l'isotherme augmente à des pressions élevées. Cette forme d'isotherme permet d'obtenir une grande capacité dynamique entre P_{ads} et P_{des}, P_{ads} étant la pression partielle à l'étape de l'adsorption et P_{des} étant la pression partielle de l'étape de désorption. Les isothermes de type II, III, IV et V selon la classification de Brunauer, Deming, Deming et Teller (J. Am. Chem. Soc. 62, 1940, 1723) possèdent une forme qui est plutôt favorable à l'utilisation de tels adsorbants dans le procédé selon l'invention.

Les valeurs minimales de capacité dynamique des adsorbants données ci-dessus ne concernent que l'adsorption de CO₂ sur cesdits adsorbants. En fonction de l'adsorption des autres impuretés et en particulier du méthane et du monoxyde de carbone, on envisagera différentes mises en oeuvre de l'invention qui sont détaillées ci-après. Il peut être avantageux d'utiliser un mélange d'adsorbants pour optimiser l'adsorption des différentes impuretés.

La composition de la charge à purifier peut varier en fonction de l'origine du gaz de synthèse. De manière générale, on regroupe sous le terme impuretés les éléments se trouvant en mélange avec l'hydrogène de la charge; c'est-à-dire principalement le dioxyde de carbone, le monoxyde de carbone et éventuellement le méthane, l'eau, l'azote, l'argon, des hydrocarbures plus lourds en très faible quantité. Toute charge présentant une composition caractérisée par une majeure partie (c'est-à-dire supérieure ou égale à 50% molaire) d'hydrogène, et une mineure partie d'impuretés à base de CO₂ CO et éventuellement de méthane, d'eau, d'azote, d'argon et d'hydrocarbures plus lourds, dans des proportions quelconques peut constituer une charge du procédé selon la présente invention.

Le procédé est d'autant plus intéressant que l'impureté principale est le dioxyde de carbone.

La charge du procédé selon l'invention peut provenir de tout procédé de transformation de charges carbonées en gaz de synthèse, tels que le vaporéformage catalytique, l'oxydation partielle et le réformage autothermique. On préférera en général que la charge du procédé selon l'invention ne provienne pas directement de ce type de procédé, mais ait subit un post-traitement dans un réacteur de type "gaz à l'eau" (Water Gas Shift en anglais), pour augmenter la teneur en CO₂ et le rendement en hydrogène.

Le procédé selon l'invention comprend différentes étapes pour lesquelles nous adopterons dans la suite du texte les conventions suivantes : on nommera extrémité d'alimentation, l'extrémité du lit par laquelle la charge est introduite lors des étapes d'adsorption, et extrémité de production l'extrémité du lit par laquelle on soutire l'hydrogène pur au cours de l'étape d'adsorption.

Le procédé selon l'invention comprend au moins les étapes suivantes :
a) une étape de pressurisation, partielle ou complète, à co- ou contre-courant : le lit est pressurisé jusqu'à atteindre la pression de l'étape d'adsorption via l'extrémité d'alimentation ou l'extrémité de production, au moyen d'un flux additionnel d'hydrogène pur ou de charge.
b) une étape d'adsorption à haute pression P_{ads} : la charge est introduite via l'extrémité d'alimentation d'un lit d'adsorbant. Les impuretés s'adsorbent dans au moins un lit, et l'on obtient de l'hydrogène pur, à haute pression, en sortie du lit (extrémité de production). On peut placer plusieurs lits en série lors de l'étape d'adsorption à haute pression, de manière à obtenir le flux d'hydrogène pur en sortie du dernier lit.
c) une étape de dépressurisation à co ou contre-courant : le lit est dépressurisé jusqu'à atteindre la pression de désorption P_{des} via l'extrémité de production ou d'alimentation.
d) une étape de désorption à haute pression P_{des} à co ou contre-courant, ladite pression étant inférieure à la pression de l'étape d'adsorption : le flux gazeux obtenu se compose essentiellement d'impuretés désorbées, et notamment de CO₂ obtenu à la pression P_{des}.

Le procédé de séparation par adsorption selon l'invention est constitué d'au moins quatre lits d'adsorbant, et de manière préférée d'au moins dix lits d'adsorbant, lesdits lits contenant au moins en partie un adsorbant appartenant aux familles d'adsorbant telles que décrites précédemment.

La température de fonctionnement est comprise entre 10°C et 250°C, et de manière préférée entre 10°C et 100°C, et de manière encore préférée entre 10°C et 50°C.

Le procédé selon l'invention tel que décrit précédemment peut se décliner selon au moins deux modes de réalisation plus particuliers que sont le procédé PSA (Pressure Swing Adsorption) et le procédé Lit Mobile Simulé (LMS).

Un premier mode de réalisation (PSA) peut se décliner selon au moins 3 variantes différentes. On rappelle que le procédé PSA est constitué de plusieurs lits remplis d'adsorbant qui suivent un cycle comprenant différentes étapes. Les variantes décrites ci-dessous précisent certaines de ces étapes selon le comportement des différents impuretés de la charge sur l'adsorbant.

Selon la première variante, les impuretés autres que le CO₂ (CH₄, CO, ...) présentent une affinité pour l'adsorbant voisine de celle du CO₂ sur au moins un des adsorbants du procédé selon l'invention, auquel cas on utilise un cycle classique de PSA appliqué à la production d'hydrogène. Celui-ci présente par exemple différentes étapes selon l'ordre suivant :
a) étape(s) de pressurisation (partielle ou complète, à co ou contre-courant, possibilité d'égalisation des pressions)
b) étape d'adsorption à haute pression
c1) étape(s) de dépressurisation partielle à co-courant (généralement égalisation des pressions)
c2) étape(s) de dépressurisation à contre-courant (possibilité d'égalisation des pressions)
d) étape de désorption à contre-courant à une pression inférieure à la pression d'adsorption

Lorsque les impuretés autres que le CO₂ (CH₄ , CO, ...) présentent une affinité pour l'adsorbant nettement plus faible que celle du CO₂ au moins un lit d'adsorbant comprend deux types d'adsorbants différents, le premier possédant une capacité dynamique d'au moins 2 mmole/g entre une pression d'adsorption (P_{ads}) de 5 MPa et une pression de désorption (P_{des}) de 0,4 MPa et un deuxième adsorbant pour l'adsorption des impuretés autres que le CO₂.

Selon une seconde variante, les impuretés autres que le CO₂ (CH₄ , CO, ...) présentent une affinité pour l'adsorbant nettement plus faible que celle du CO₂, auquel cas on utilise un des adsorbants ayant une capacité dynamique élevée pour le CO₂ telle que définie précédemment dans une première couche du lit, ladite couche étant suivie d'une seconde couche constituée d'un autre adsorbant visant à adsorber les autres impuretés. Les deux adsorbants sont donc répartis dans deux couches de lit successives.

On adapte alors le cycle PSA, en imposant au moins deux étapes de désorption à des pressions différentes. Le cycle est par exemple le suivant:
a) étape(s) de pressurisation (partielle ou complète, à co ou contre-courant, possibilité d'égalisation des pressions)
b) étape d'adsorption à haute pression
c1) étape(s) de dépressurisation à co-courant (possibilité d'égalisation des pressions)
c2) étape(s) de dépressurisation à contre-courant (possibilité d'égalisation des pressions)
d) étape de désorption à contre-courant, à la pression de désorption P_{des} (entre 2 et 0,4 MPa)
e) étape de désorption à basse pression (pression de désorption des autres impuretés: entre 0,4 MPa et la pression atmosphérique) à co ou contre-courant.

Selon une troisième variante, les impuretés autres que le CO₂ (CH₄ , CO, ...) présentent une affinité pour l'adsorbant nettement plus faible que celle du CO₂, auquel cas on utilise au moins un des adsorbants ayant une capacité dynamique élevée pour le CO₂ telle que définie précédemment dans un lit spécifique. Un second lit contenant un autre adsorbant visant à adsorber les autres impuretés est placé en série du premier lit contenant au moins un des adsorbants ayant une capacité dynamique élevée telle que définie précédemment.

Les deux adsorbants sont ainsi répartis dans au moins deux lits spécifiques.

On peut alors régénérer indépendamment et à des pressions différentes le lit ayant adsorbé le CO₂ du lit ayant adsorbé les autres impuretés. Le cycle PSA est alors différent pour les différents lits.

Le premier lit contenant un des adsorbants du procédé selon l'invention, on adapte le cycle PSA par exemple de la manière suivante, avec une pression de désorption comprise entre 2 et 0,4 MPa:
a) étape(s) de pressurisation (partielle ou complète, à co ou contre-courant, possibilité d'égalisation des pression)
b) étape d'adsorption à haute pression (en série avec le second lit)
c) étape(s) de dépressurisation à co et/ou contre-courant
d) étape de désorption à la pression P_{des} à contre-courant

Le second lit contenant l'adsorbant adapté pour adsorber les impuretés autres que le CO₂, on applique un cycle PSA classique, avec désorption à basse pression (pression inférieure à la pression de désorption du premier lit):
a) étape(s) de pressurisation (partielle ou complète, à co ou contre-courant, possibilité d'égalisation des pression)
b) étape d'adsorption à haute pression (en série avec le premier lit)
c1) étape(s) de dépressurisation partielle à co-courant (généralement égalisation de pression)
c2) étape(s) de dépressurisation à contre-courant
d') étape de désorption à basse pression (entre 0,1 et 0,4 MPa) à contre-courant

Un second mode de réalisation du procédé est une opération selon le procédé de lit mobile simulé (LMS) fonctionnant en phase gazeuse, dans lequel la désorption de l'adsorbant est réalisée par dépressurisation avec ou sans injection de désorbant.

Le principe du lit mobile simulé est bien connu de l'homme de l'art, et plusieurs études font état d'un procédé de ce type employant une étape de dépressurisation pour régénérer l'adsorbant [US 6,293,999 ; Rao et al., 2005, Journal of Chromatography A, n°1069, p.141].

Le fait de régénérer l'adsorbant en pression permet de récupérer le CO₂ en pression dans l'extrait.

Dans ce mode de réalisation particulier, on utilise un adsorbant du procédé tel que les impuretés autres que le CO₂ (CH₄ , CO, ...) présentent des propriétés d'adsorption voisines du CO₂.

Une description détaillée d'un procédé de LMS appliqué à la purification de l'hydrogène est fournie dans la demande de brevet déposé sous le numéro d'enregistrement national FR 06/08.804 par la Demanderesse.

Rappelons qu'une colonne fonctionnant en lit mobile simulé est constituée de plusieurs lits fixes d'adsorbant et comporte une pluralité d'entrées (pour la charge et l'éluant) et de sorties (pour l'extrait et le raffinat) réparties sur toute sa longueur, entrées et sorties qui sont régulièrement décalées au cours du temps en respectant leurs positions relatives, de manière à balayer l'ensemble des positions possibles et créer de la sorte un déplacement fictif de l'adsorbant à contre-courant du fluide.

Le procédé reprend le principe dudit procédé décrit dans la demande de brevet FR 06/08.804 mais en remplaçant ou en complétant l'étape de désorption par un désorbant par une étape de dépressurisation / désorption / repressurisation.

La première variante du second mode de réalisation du procédé correspond à un procédé LMS 3 zones, présentant au moins un soutirage d'extrait.

La seconde variante du mode LMS du procédé correspond à un procédé LMS 2 zones présentant au moins un soutirage d'extrait.

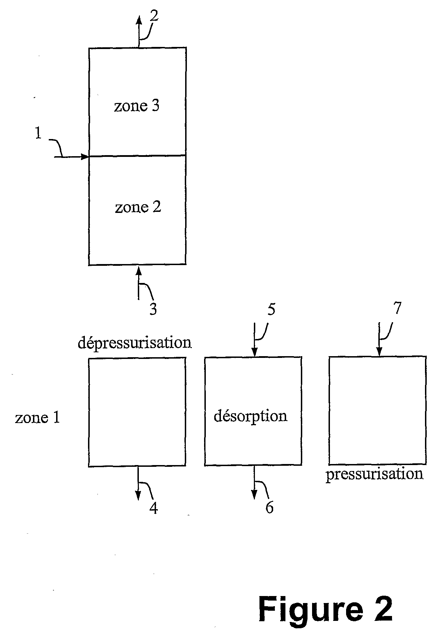

La première variante du second mode de réalisation du procédé est illustrée par la Figure 2 donnée à titre d'exemple et non limitative. Elle comprend les étapes suivantes :
a) une étape de mise en contact dans des conditions d'adsorption adéquates (notamment à une pression P_{ads}), de la charge (1) contenant de l'hydrogène et des impuretés avec un solide adsorbant (appelé aussi adsorbant) contenu dans une pluralité de lits de manière à adsorber préférentiellement les impuretés,
b) une étape de déplacement de l'hydrogène contenu dans les volumes interstitiels et macroporeux ;
c) une étape de désorption de l'adsorbant comprenant :
   - une ou plusieurs sous-étapes de dépressurisation à co- ou contre courant à une haute pression P_{des} inférieure à la pression P_{ads}. Cette étape peut éventuellement inclure l'ajout d'un désorbant (tel que par exemple un hydrocarbure comprenant 3 à 9 atomes de carbone) ;
   - une sous-étape de désorption à la pression P_{des}, durant laquelle le lit est balayé par un flux de gaz (désorbant ou hydrogène) (5)
   - une ou plusieurs sous-étapes de repressurisation à co ou contre-courant avec une partie du flux d'hydrogène pur (raffinat) ou avec un flux de désorbant (7).

Le flux d'extrait (4 et 6) est obtenu lors des sous-étapes de dépressurisation et de désorption du lit, et contient les impuretés et éventuellement une partie du désorbant.

Si les impuretés présentent des affinités différentes avec le solide adsorbant, il est possible de régénérer le lit à différentes pressions, en appliquant à plusieurs reprises la série des deux premières sous-étapes décrites ci-dessus. Cela permet de différencier les flux d'extrait qui présentent des compositions et des niveaux de pression différents.
d) une étape de soutirage d'un raffinat (2) contenant l'hydrogène purifié et éventuellement une partie du désorbant,
e) dans le cas de l'utilisation d'un désorbant, une étape de séparation de l'extrait en un premier flux contenant le désorbant, et un second flux contenant les impuretés,
f) dans le cas de l'utilisation d'un désorbant, une étape de séparation du raffinat en un premier flux contenant le désorbant et un second flux contenant l'hydrogène à haute pureté.

On rappelle que l'on entend par haute pureté une teneur en hydrogène dans l'effluent du présent procédé égale ou supérieure à 99,9 % molaire, et préférentiellement supérieure à 99,99 % molaire.

L'unité de séparation par adsorption mise en oeuvre selon la technique du lit mobile simulé comprend, selon cette première variante, trois zones délimitées par les injections de charge et éventuellement de désorbant et le soutirage de raffinat de la manière suivante:
- la zone 1 correspondant au(x) lit(s) en phase de désorption des impuretés majoritairement constituées de dioxyde de carbone, de monoxyde de carbone et de méthane. Elle comporte au moins un lit,
- la zone 2 permet d'augmenter le rendement en hydrogène par déplacement de l'hydrogène au sein des volumes macroporeux et interstitiel à l'aide d'un balayage par un flux (3) contenant soit du désorbant, soit un mélange d'impuretés et présentant une faible quantité d'hydrogène, comme par exemple une partie du flux d'extrait repressurisé à la pression d'adsorption. Cette zone est comprise entre la zone 1 et l'injection de la charge (1). Elle comporte au moins un lit,
- la zone 3, dans laquelle a lieu l'adsorption des impuretés, est comprise entre l'injection de la charge (1) et le soutirage du raffinat (2). Elle comporte au moins un lit, et de préférence au moins trois lits.

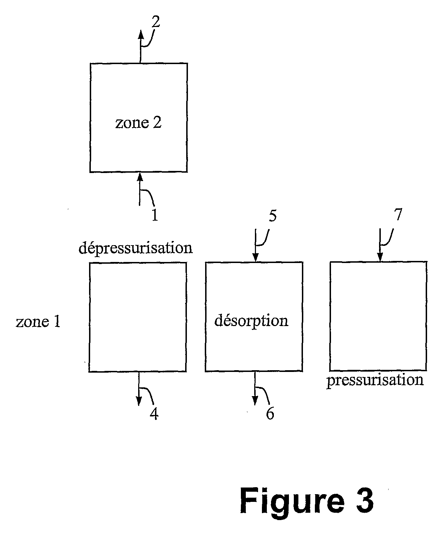

La seconde variante du mode LMS du procédé est illustrée par la figure 3 donnée à titre d'exemple et non limitative. Elle comprend les étapes suivantes :
a) une étape de mise en contact dans des conditions d'adsorption adéquates (notamment à une pression P_{ads}), de la charge (1) contenant de l'hydrogène et des impuretés avec un solide adsorbant (appelé aussi adsorbant) contenu dans une pluralité de lits de manière à adsorber préférentiellement les impuretés,
b) une étape de désorption de l'adsorbant comprenant :
   - une ou plusieurs sous-étapes de dépressurisation à co- ou contre courant à une haute pression P_{des} inférieure à la pression P_{ads}. Cette étape peut éventuellement inclure l'ajout d'un désorbant (hydrocarbure comprenant 3 à 9 atomes de carbone) ;
   - une sous-étape de désorption à la pression P_{des}, durant laquelle le lit est balayé par un flux de gaz (désorbant ou hydrogène) (5)
   - une ou plusieurs sous-étapes de repressurisation à co ou contre-courant avec une partie du flux d'hydrogène pur (raffinat) ou avec un flux de désorbant (7)

Le flux d'extrait (4 et 6) est obtenu lors des sous-étapes de dépressurisation et de désorption du lit, et contient les impuretés et éventuellement une partie du désorbant.

Si les impuretés présentent des affinités différentes avec le solide adsorbant, il est possible de régénérer le lit à différentes pressions, en appliquant à plusieurs reprises la série des deux premières sous-étapes décrites ci-dessus. Cela permet de différencier les flux d'extrait qui présentent des compositions et des niveaux de pression différents.
c) une étape de soutirage d'un raffinat (2) contenant l'hydrogène purifié et éventuellement une partie du désorbant ;
d) dans le cas de l'utilisation d'un désorbant, une étape de séparation de l'extrait en un premier flux contenant le désorbant, et un second flux contenant les impuretés,
e) dans le cas de l'utilisation d'un désorbant, une étape de séparation du raffinat en un premier flux contenant le désorbant et un second flux contenant l'hydrogène à haute pureté.

L'unité de séparation par adsorption mise en oeuvre selon la technique du lit mobile simulé comprend, selon cette deuxième variante, deux zones délimitées par l'injection de charge et le soutirage de raffinat de la manière suivante:
- la zone 1 correspondant au(x) lit(s) en phase de désorption des impuretés majoritairement constituées de dioxyde de carbone, de monoxyde de carbone et de méthane. Elle comporte au moins un lit,
- la zone 2, dans laquelle a lieu l'adsorption des impuretés, est comprise entre l'injection de la charge (1) et le soutirage du raffinat (2). Elle comporte au moins un lit, et de préférence au moins trois lits.

Il peut être intéressant de coupler le procédé selon l'invention avec un autre procédé de séparation. Ainsi, on pourra avantageusement récupérer une partie de l'hydrogène contenu dans le flux résiduel riche en CO₂ par ajout d'un procédé de séparation permettant de séparer sélectivement une partie de l'hydrogène contenu dans ce flux tout en maintenant le CO₂ en pression.

On peut ainsi envisager d'utiliser un procédé membranaire, avec une membrane sélective à l'hydrogène. Dans ce cas, le CO₂ est majoritairement récupéré dans le rétentat, donc à haute pression, alors que l'hydrogène est récupéré dans le perméat à plus faible pression.

De même, le couplage avec un autre procédé de séparation peut également permettre d'augmenter la pureté du CO₂ contenu dans le flux résiduel du PSA selon l'invention. Cela peut permettre de réduire les coûts de compression complémentaires, par exemple dans le cas du stockage du CO₂. L'augmentation de la pureté du CO₂ peut également être intéressante si l'on souhaite utiliser le CO₂ produit pour toute application complémentaire. Tout procédé de séparation permettant d'extraire sélectivement une des molécules du flux résiduel à l'exception du CO₂ tout en maintenant le flux riche en CO₂ en pression peut être utilisé. On peut citer notamment les procédés membranaires et les procédés d'extraction par solvant.

L'hydrogène produit par le procédé selon l'invention peut être utilisé comme réactif dans tout procédé, notamment de pétrochimie ou de raffinerie, mais également comme carburant pour les piles à combustible. Le mode de fonctionnement (enchaînement des cycles d'adsorption/désorption, nombre d'étapes de compression et de décompression...) du procédé selon l'invention peut être optimisé en fonction de la pureté souhaitée de l'hydrogène.

### EXEMPLES

Les exemples qui suivent précisent l'invention sans en limiter la portée.

### Exemple 1 selon l'Art Antérieur

Pour une composition typique de gaz de synthèse de 67% molaire H₂ et 33% molaire de CO₂, les autres impuretés étant négligées, et pour une pression d'adsorption P_{ads} de 3 MPa , la pression partielle en CO₂ pendant la phase d'adsorption est de 1 MPa.

A partir des données de capacité d'adsorption pour le CO₂ décrites dans l'art antérieur, nous avons calculé les capacités dynamiques de trois adsorbants classiquement utilisés dans les PSA hydrogène pour des pressions de désorption P_{des} supérieures à 0,4 MPa.

**Tableau 1 : Capacité dynamique (mmole/g) d'adsorbant pour une pression de désorption de 0,1, 0,4 MPa et 0,5 MPa:**

| | Pression de désorption P_{des} | | |
|---|---|---|---|
| | 0,1 MPa | 0,4 MPa | 0,5 MPa |
| Charbon actif | 3,95 | 1,95 | 1,45 |
| Zéolithe 13X | 1,9 | 0,75 | 0,5 |
| Zéolithe 5A | 0,55 | 0,05 | 0,05 |

Les capacités dynamiques de ces adsorbants sont élevées pour une pression de désorption de 0,1 MPa, mais chutent rapidement lorsque la pression de désorption est égale ou supérieure à 0,4 MPa. Donc pour une pression de désorption supérieure à 0,4 MPa, les performances du procédé sont nettement moins intéressantes que lorsque la pression de désorption est située aux environ de 0,1 MPa (pression de désorption habituelle pour ces adsorbants). Une des trois performances caractéristiques du procédé (pureté de l'hydrogène, rendement en hydrogène ou productivité) doit par conséquent être réduite.

### Exemple 2 selon l'invention

Pour une composition typique de gaz de synthèse de 67% molaire H₂ et 33% molaire de CO₂, les autres impuretés étant négligées, et pour une pression d'adsorption de 3 MPa la pression partielle en CO₂ pendant la phase d'adsorption est de 1 MPa.

Les capacités dynamiques des adsorbants de type Metal-Organic Framework MOF ont été calculées à partir des isothermes publiées dans l'Art Antérieur.

**Tableau 2 : Capacité dynamique (mmole/g) d'adsorbants MOF pour une pression de désorption de 0,4 MPa et 0,5 MPa:**

| | Pression de désorption P_{des} | |
|---|---|---|
| | 0,4 MPa | 0,5 MPa |
| MIL-53 | 4,95 | 4,75 |
| IRMOF-11 | 5,1 | 4 |
| IRMOF-6 | 7 | 5,9 |
| IRMOF-1 | 7,4 | 6,2 |
| IRMOF-3 | 8 | 6,5 |
| MOF-177 | 8 | 6,9 |

On constate que les capacités dynamiques d'adsorption des adsorbants selon l'invention sont très nettement supérieures aux capacités dynamiques des adsorbants selon l'art antérieur, pour des conditions de fonctionnement conformes au procédé de séparation par adsorption selon l'invention.

La capacité dynamique étant directement liée aux performances du procédé de séparation, cela signifie que, pour des pressions de désorptions supérieures à 0,4 MPa, le procédé fonctionnant avec un adsorbant selon l'invention aura des performances (en terme de pureté de l'hydrogène, rendement en hydrogène ou productivité) supérieures à un procédé fonctionnant avec un adsorbant classique tel que cité dans l'exemple 1.

Par conséquent, le procédé selon l'invention aura des performances au moins égales et même potentiellement supérieure au procédé classique avec une pression de désorption de 0,1 MPa.

### Exemple 3 (comparatif)

L'exemple compare la capacité dynamique de deux adsorbants différents appartenant à la famille des « Metal-Organic Frameworks » : MIL-53 et MOF-505. Les deux adsorbants possèdent la même capacité d'adsorption pour le CO₂ pur à 1 MPa (8 mmole/g). Or, la capacité, dynamique du MIL-53 entre P_{ads} et P_{des} = 0,4 ou 0,5 MPa est nettement plus importante.

**Tableau 3 : Capacité dynamique (mmole/g) des deux adsorbants pour une pression de désorption P_{des} de 0,4 MPa et 0,5 MPa :**

| | pression de désorption P_{des} | |
|---|---|---|
| | 0,4 MPa | 0,5 MPa |
| MIL-53 | 4,95 | 4,75 |
| MOF-505 | 1,9 | 1,5 |

L'exemple montre que des adsorbants possédant de très fortes capacités d'adsorption pour le CO₂ à la pression d'adsorption ne possèdent pas obligatoirement de fortes capacités d'adsorption lorsque la pression de désorption P_{des} est supérieure à 0,4 MPa. La capacité d'adsorption du CO₂ à la pression d'adsorption n'est donc pas le critère important pour le choix d'un adsorbant pour le procédé selon l'invention.

## Revendications

1. Procédé de production d'hydrogène d'une pureté supérieure à 99% volumique et de cogénération d'un flux d'impuretés contenant essentiellement du CO₂ à partir d'une charge contenant majoritairement ledit hydrogène et une mineure partie d'impuretés principalement constituées de dioxyde de carbone, monoxyde de carbone, méthane et hydrocarbures plus lourds, ladite charge étant introduite dans une colonne d'adsorption constituée d'une pluralité de lits, ledit procédé comprenant au moins les étapes suivantes :
a) une étape de pressurisation, partielle ou complète, à co- ou contre-courant de ladite charge jusqu'à atteindre la pression de l'étape d'adsorption (P_{ads}) comprise entre 1,5 MPa et 5 MPa, au moyen d'un flux additionnel d'hydrogène pur ou de charge ;
b) une étape d'adsorption à la pression P_{ads} des impuretés de la charge pressurisée à l'étape a), réalisée sur un solide adsorbant contenu dans un ou plusieurs lits ;
c) une étape de dépressurisation à co- ou contre-courant du flux issu de l'étape b), jusqu'à atteindre la pression de désorption P_{des} comprise entre 0,4 MPa et 2 MPa;
d) une étape de désorption à la pression P_{des} à co- ou contre-courant de l'adsorbant, ladite pression P_{des} étant inférieure à la pression de l'étape d'adsorption,
dans lequel au moins un adsorbant constituant un lit ou une partie d'un lit présente une capacité dynamique de dioxyde de carbone d'au moins 2 mmole/g entre une pression d'adsorption (P_{ads}) de 5 MPa et une pression de désorption de CO₂ (P_{des}) de 0,4 MPa, la capacité dynamique étant définie comme la différence entre la quantité de CO₂ adsorbée dans les conditions de l'étape d'adsorption et la quantité restant adsorbée après désorption.

2. Procédé selon la revendication 1 dans lequel la colonne d'adsorption est constituée d'au moins quatre lits d'adsorbant, et de manière préférée d'au moins dix lits d'adsorbant.

3. Procédé selon la revendication 1 ou 2 dans lequel au moins un adsorbant présente par une capacité dynamique de dioxyde de carbone d'au moins 4 mmole/g entre une pression d'adsorption (P_{ads}) de 5 MPa et une pression de désorption (P_{des}) de 0,4 MPa.

4. Procédé selon l'une des revendications 1 ou 2 dans lequel au moins un adsorbant présente une capacité dynamique de dioxyde de carbone d'au moins 2 mmole/g et préférentiellement au moins 4 mmole/g entre P_{ads} de 3 MPa et P_{des} de 0,4 MPa.

5. Procédé selon l'une des revendications 1 ou 2 dans lequel au moins un adsorbant présente une capacité dynamique de dioxyde de carbone d'au moins 2 mmole/g et préférentiellement au moins 4 mmole/g entre P_{ads} de 3 MPa et P_{des} de 0,5 MPa.

6. Procédé selon la revendication 1 dans lequel la pression d'adsorption (Pads) est comprise entre 2 et 4 MPa et la pression de désorption (P_{des}) est comprise entre 0,4 et 0,6 MPa.

7. Procédé selon l'une des revendications précédentes, dans lequel ledit adsorbant a une taille de pores comprise entre 5 et 50 Å et un volume poreux compris entre 0,5 et 5 ml/g.

8. Procédé selon la revendication 7, dans lequel ledit adsorbant a une taille de pores comprise entre 7 et 25 Å et un volume poreux compris entre 0,8 et 3 ml/g.

9. Procédé selon l'une des revendications 7 ou 8 dans lequel l'adsorbant est choisi dans le groupe formé par les « Metal-Organic Framework », les silices mésoporeuses, les charbons actifs ayant une surface spécifique supérieure à 2000 m²/g.

10. Procédé selon l'une des revendications 7 à 9, dans lequel l'adsorbant est choisi parmi les Metal-Organic Framework ou MOFs respirants, c'est-à-dire les structures flexibles dont les pores s'ouvrent et ont des tailles supérieures à 5 Å à la pression d'adsorption (P_{ads}).

11. Procédé selon l'une des revendications 7 à 10, dans lequel l'adsorbant est choisi parmi IRMOF-1, IRMOF-3, IRMOF-6, IRMOF-11, MOF-177, Cu₃(tatb)₂, MIL-100, MIL-101 et MIL-53.

12. Procédé selon l'une des revendications précédentes dans lequel la température de fonctionnement est comprise entre 10°C et 250°C, préférentiellement entre 10°C et 100°C et encore plus préférentiellement entre 10°C et 50°C.

13. Procédé selon l'une des revendications 1 à 12 opéré selon la mise en oeuvre par séparation par adsorption modulée en pression, dans lequel, les impuretés autres que le CO₂ présentant une affinité pour l'adsorbant voisine de celle du CO₂, l'étape a) de pressurisation est réalisée en plusieurs fois et l'étape c) comprend au moins deux étapes définies par :
c1) une ou plusieurs étape(s) de dépressurisation partielle à co-courant ;
c2) une ou plusieurs étape(s) de dépressurisation à contre courant.

14. Procédé selon l'une des revendications 1 à 12 opéré selon la mise en oeuvre par séparation par adsorption modulée en pression, dans lequel, les impuretés autres que le CO₂ présentant une affinité pour l'adsorbant nettement plus faible que celle CO₂, au moins un lit d'adsorbant comprend deux types d'adsorbants différents, le premier possédant une capacité dynamique d'au moins 2 mmole/g entre une pression d'adsorption (P_{ads}) de 5 MPa et une pression de désorption (P_{des}) de 0,4 MPa et un deuxième adsorbant pour l'adsorption des impuretés autres que le CO₂.

15. Procédé selon la revendication 14 dans lequel les deux adsorbants différents sont répartis dans au moins deux couches de lits successives et où l'étape a) de pressurisation est réalisée en plusieurs fois, l'étape c) comprend deux étapes définies par :
c1) une ou plusieurs étape(s) de dépressurisation partielle à co-courant ;
c2) une ou plusieurs étape(s) de dépressurisation à contre courant;
et l'étape d) comprend deux étapes définies par :
d) une étape de désorption à contre-courant, à la pression de désorption du CO₂ entre 2 et 0,4 MPa,
e) une étape de désorption à basse pression comprise entre 0,4 MPa et la pression atmosphérique, à co- ou contre-courant.

## Patentansprüche

1. Verfahren zur Herstellung von Wasserstoff mit einer Reinheit größer 99 Vol.-% und zur gleichzeitigen Erzeugung eines Stroms aus Verunreinigungen, der im Wesentlichen CO₂ enthält, aus einer Beschickung, die überwiegend Wasserstoff und einen kleineren Teil Verunreinigungen enthält, die im Wesentlichen aus Kohlendioxid, Kohlenmonoxid, Methan und schwereren Kohlenwasserstoffen bestehen, wobei die Beschickung in eine Adsorptionskolonne eingeführt wird, die aus einer Vielzahl von Betten besteht, wobei das Verfahren mindestens die folgenden Schritte umfasst:
a) einen Schritt zur teilweisen oder vollständigen Beaufschlagung mit Druck, im Gleichstrom oder im Gegenstrom der Beschickung, bis der Druck des Schritts zur Adsorption (P_{ads}) im Bereich zwischen 1,5 MPa und 5 MPa erreicht wird, mithilfe eines zusätzlichen Stroms aus reinem Wasserstoff oder Beschickung;
b) einen Schritt zur Adsorption bei dem Druck P_{ads} der Verunreinigungen der in Schritt a) mit Druck beaufschlagten Beschickung, der auf einem adsorbierenden Feststoff durchgeführt wird, der in einem oder mehreren Betten enthalten ist;
c) einen Schritt zur Druckerniedrigung im Gleichstrom oder im Gegenstrom des aus Schritt b) stammenden Stroms, bis zum Erreichen des Desorptionsdrucks P_{des} im Bereich zwischen 0,4 MPa und 2 MPa;
d) einen Schritt zur Desorption bei dem Druck P_{des} im Gleichstrom oder im Gegenstrom des Adsorptionsmittels, wobei der Druck P_{des} kleiner ist als der Druck im Schritt zur Adsorption,
wobei mindestens ein Adsorptionsmittel, das ein Bett oder einen Teil eines Bettes bildet, eine dynamische Kohlendioxidkapazität von mindestens 2 mmol/g zwischen einem Adsorptionsdruck (P_{ads}) von 5 MPa und einem CO₂-Desorptionsdruck (P_{des}) von 0,4 MPa aufweist, wobei die dynamische Kapazität als Differenz zwischen der Menge an CO₂, die unter den Bedingungen des Schritts zur Adsorption adsorbiert wird, und der Menge, die nach der Desorption absorbiert bleibt, definiert ist.

2. Verfahren nach Anspruch 1, wobei die Adsorptionskolonne aus mindestens vier Adsorptionsmittelbetten und bevorzugt aus mindestens zehn Adsorptionsmittelbetten besteht.

3. Verfahren nach Anspruch 1 oder 2, wobei mindestens ein Adsorptionsmittel eine dynamische Kohlendioxid-Kapazität von mindestens 4 mmol/g zwischen einem Adsorptionsdruck (P_{ads}) von 5 MPa und einem Desorptionsdruck (P_{des}) von 0,4 MPa aufweist.

4. Verfahren nach einem der Ansprüche 1 oder 2, wobei mindestens ein Adsorptionsmittel eine dynamische Kohlendioxidkapazität von mindestens 2 mmol/g und vorzugsweise mindestens 4 mmol/g zwischen einem P_{ads} von 3 MPa und einem P_{des} von 0,4 MPa aufweist.

5. Verfahren nach einem der Ansprüche 1 oder 2, wobei mindestens ein Adsorptionsmittel eine dynamische Kohlendioxidkapazität von mindestens 2 mmol/g und vorzugsweise mindestens 4 mmol/g zwischen einem P_{ads} von 3 MPa und einem P_{des} von 0,5 MPa aufweist.

6. Verfahren nach Anspruch 1, wobei der Adsorptionsdruck (P_{ads}) im Bereich zwischen 2 und 4 MPa liegt und der Desorptionsdruck (P_{des}) im Bereich zwischen 0,4 und 0,6 MPa liegt.

7. Verfahren nach einem der vorhergehenden Ansprüche, wobei das Adsorptionsmittel eine Porengröße im Bereich zwischen 5 und 50 Å und ein Porenvolumen im Bereich zwischen 0,5 und 5 ml/g aufweist.

8. Verfahren nach Anspruch 7, wobei das Adsorptionsmittel eine Porengröße im Bereich zwischen 7 und 25 Å und ein Porenvolumen im Bereich zwischen 0,8 und 3 ml/g aufweist.

9. Verfahren nach einem der Ansprüche 7 oder 8, wobei das Adsorptionsmittel ausgewählt ist aus der Gruppe bestehend aus "Metal-Organic Framework", mesoporösen Siliciumdioxiden, Aktivkohlen mit einer spezifischen Oberfläche größer 2.000 m²/g.

10. Verfahren nach einem der Ansprüche 7 bis 9, wobei das Adsorptionsmittel ausgewählt ist aus Metal-Organic Framework oder atmenden MOFs, das heißt flexiblen Strukturen, deren Poren sich öffnen und die Größen von mehr als 5 Å bei Adsorptionsdruck (P_{ads}) aufweisen.

11. Verfahren nach einem der Ansprüche 7 bis 10, wobei das Adsorptionsmittel ausgewählt ist aus IRMOF-1, IRMOF-3, IRMOF-6, IRMOF-11, MOF-177, Cu₃(tatb)₂, MIL-100, MIL-101 und MIL-53.

12. Verfahren nach einem der vorhergehenden Ansprüche, wobei die Arbeitstemperatur im Bereich zwischen 10 °C und 250 °C, vorzugsweise zwischen 10 °C und 100 °C und noch stärker bevorzugt zwischen 10 °C und 50 °C liegt.

13. Verfahren nach einem der Ansprüche 1 bis 12, das gemäß der Durchführung durch Trennung durch Druckwechseladsorption vorgenommen wird, wobei die Verunreinigungen, bei denen es sich nicht um CO₂ handelt, eine Affinität für das Adsorptionsmittel aufweisen, die der des CO₂ benachbart ist, wobei Schritt a) zur Beaufschlagung mit Druck mehrmals durchgeführt wird und Schritt c) mindestens zwei Schritte umfasst, die durch Folgendes definiert sind:
c1) einen oder mehrere Schritt(e) zur teilweisen Druckerniedrigung im Gleichstrom;
c2) einen oder mehrere Schritt(e) zur Druckerniedrigung im Gegenstrom;

14. Verfahren nach einem der Ansprüche 1 bis 12, das gemäß der Durchführung durch Trennung mittels Druckwechseladsorption vorgenommen wird, wobei die Verunreinigungen, bei denen es sich nicht um CO₂ handelt, eine Affinität für das Adsorptionsmittel aufweisen, die deutlich geringer ist als die des CO₂, wobei mindestens ein Adsorptionsbett zwei Arten von verschiedenen Adsorptionsmitteln umfasst, wobei das erste eine dynamische Kapazität von mindestens 2 mmol/g zwischen einem Adsorptionsdruck (P_{ads}) von 5 MPa und einem Desorptionsdruck (P_{des}) von 0,4 MPa besitzt, und ein zweites Adsorptionsmittel für die Adsorption der Verunreinigungen, bei denen es sich nicht um CO₂ handelt.

15. Verfahren nach Anspruch 14, wobei die beiden verschiedenen Adsorptionsmittel in mindestens zwei Schichten von aufeinander folgenden Betten verteilt sind und worin Schritt a) zur Beaufschlagung mit Druck mehrmals durchgeführt wird, wobei Schritt c) zwei Schritte umfasst, die durch Folgendes definiert sind:
c1) einen oder mehrere Schritt(e) zur teilweisen Druckerniedrigung im Gleichstrom;
c2) einen oder mehrere Schritt(e) zur Druckerniedrigung im Gegenstrom;
und Schritt d) umfasst zwei Schritte, die durch Folgendes definiert sind:
d) einen Schritt zur Desorption im Gegenstrom bei dem CO₂-Desorptionsdruck zwischen 2 und 0,4 MPa,
e) einen Schritt zur Desorption bei niedrigem Druck im Bereich zwischen 0,4 MPa und Atmosphärendruck im Gleichstrom oder im Gegenstrom.

## Claims

1. A method of producing hydrogen of very high purity from a feed predominantly containing said hydrogen and a minor part of impurities mainly consisting of carbon dioxide, carbon monoxide, methane and heavier hydrocarbons, said feed being introduced into at least one adsorption column made up of a plurality of beds, said method comprising at least the following stages:
a) a stage of partial or complete, cocurrent or counter-current pressurization of said feed until the pressure of the adsorption stage (P_{ads}) is reached, in the range 1,5 MPa to 5 MPa, by means of an additional pure hydrogen or feed stream,
b) a stage of adsorption at high pressure P_{ads} of the impurities of the feed pressurized in stage a), carried out on an adsorbent solid contained in one or more beds,
c) a stage of cocurrent or counter-current depressurization of the stream from stage b) until the desorption pressure P_{des} in the range 0.4 MPa to 2 MPa is reached,
d) a cocurrent or counter-current desorption stage at high pressure P_{des}, said pressure P_{des} being lower than the adsorption stage pressure,
wherein at least one adsorbent making up a bed or part of a bed has a carbon dioxide dynamic capacity of at least 2 mmole/g between an adsorption pressure (P_{ads}) of 5 MPa and a CO₂ desorption pressure (P_{des}) of 0.4 MPa, the dynamic capacity being defined as the difference between the amount of CO₂ adsorbed under the adsorption stage conditions and the amount that remains adsorbed after desorption.

2. A method as claimed in claim 1, wherein the adsorption column is made up of at least four adsorbent beds, preferably at least ten adsorbent beds.

3. A method as claimed in any one of claims 1 or 2, wherein at least one adsorbent has a carbon dioxide dynamic capacity of at least 4 mmole/g between an adsorption pressure (P_{ads}) of 5 MPa and a desorption pressure (P_{des}) of 0.4 MPa.

4. A method as claimed in any one of claims 1 or 2, wherein at least one adsorbent has a carbon dioxide dynamic capacity of at least 2 mmole/g and preferably at least 4 mmole/g between an adsorption pressure (P_{ads}) of 3 MPa and a desorption pressure (P_{des})
of 0.4 MPa.

5. A method as claimed in any one of claims 1 or 2, wherein at least one adsorbent has a carbon dioxide dynamic capacity of at least 2 mmole/g and preferably at least 4 mmole/g between an adsorption pressure (P_{ads}) of 3 MPa and a desorption pressure (P_{des})
of 0.5 MPa.

6. A method as claimed in any one of the previous claims, wherein adsorption pressure (P_{ads}) ranges between 2 and 4 MPa, and desorption pressure (P_{des}) ranges between 0.4 and
0.6 MPa.

7. A method as claimed in any one of the previous claims, wherein said adsorbent has a pore size ranging between 5 and 50 Å, and a pore volume ranging between 0.5 and 5 ml/g.

8. A method as claimed in claim 7, wherein said adsorbent has a pore size ranging between
7 and 25 Å, and a pore volume ranging between 0.8 and 3 ml/g.

9. A method as claimed in any one of claims 7 or 8, wherein the adsorbent is selected from the group consisting of Metal-Organic Frameworks (MOFs), mesoporous silicas, activated charcoals having a specific surface area above 2000 m²/g.

10. A method as claimed in any one of claims 7 to 9, wherein the adsorbent is selected from among the breathing MOFs, i.e. flexible structures whose pores open and whose size is above 5 Å at adsorption pressure (P_{ads}).

11. A method as claimed in any one of claims 7 to 10, wherein the adsorbent is selected from among IRMOF-1, IRMOF-3, IRMOF-6, IRMOF-11, MOF-177, Cu₃(tatb)₂, MIL-100, MIL-101 and MIL-53.

12. A method as claimed in any one of the previous claims, wherein the working temperature ranges between 10°C and 250°C, preferably between 10°C and 100°C, and most preferably between 10°C and 50°C.

13. A method as claimed in any one of claims 1 to 12 operated according to the separation by adsorption varying in pressure (PSA implementation), wherein, the impurities other than CO₂ having an affinity towards the adsorbent close to that of CO₂, pressurization stage a) is carried out several times and stage c) comprises at least two stages defined by:
c1) one or more cocurrent partial depressurization stages,
c2) one or more counter-current depressurization stages.

14. A method as claimed in any one of claims 1 to 12 operated according to the PSA implementation, wherein, the impurities other than CO₂ having an affinity towards the adsorbent markedly lower than that of CO₂, at least one adsorbent bed comprises two different adsorbent types, the first one having a dynamic capacity of at least 2 mmole/g between an adsorption pressure (P_{ads}) of 5 MPa and a desorption pressure (P_{des}) of 0.4 MPa, and a second adsorbent for the adsorption of impurities other than CO₂.

15. A method as claimed in claim 14, wherein the two different adsorbents are distributed in at least two successive bed layers and pressurization stage a) is carried out several times, stage c) comprises two stages defined by:
c1) one or more cocurrent partial depressurization stages,
c2) one or more counter-current depressurization stages,
and stage d) comprises two stages defined by:
d) a counter-current desorption stage at the CO₂ desorption pressure between 2 and 0.4 MPa,
e) a cocurrent or counter-current desorption stage at a low pressure ranging between 0.4 MPa and atmospheric pressure.
